# EUROPEAN PATENT SPECIFICATION

(11) **EP 1 004 760 B1**
(45) Date of publication and mention of the grant of the patent: **05.04.2006**
(21) Application number: 99123581.3
(22) Date of filing: 26.11.1999
(51) Int. Cl.: F02D 21/08, F02D 33/02, F02D 43/00, F02D 41/12

(54) **Control apparatus of engine having turbo supercharger**
Steuervorrichtung für eine aufgeladene Brennkraftmaschine
Dispositif de commande pour moteur à combustion interne suralimenté

(30) Priority: 27.11.1998 JP 33793798; 25.08.1999 JP 23891999
(43) Date of publication of application: 31.05.2000
(73) Proprietor: Mazda Motor Corporation, Aki-gun, Hiroshima 730-8670 (JP)
(72) Inventor: Watanabe, Tomomi, c/o Mazda Motor Corporation, Aki-gun, Hiroshima 730-8670 (JP); Hayashibara, Hiroshi, c/o Mazda Motor Corporation, Aki-gun, Hiroshima 730-8670 (JP); Araki, Keiji, c/o Mazda Motor Corporation, Aki-gun, Hiroshima 730-8670 (JP)
(74) Representative: Laufhütte, Dieter

(56) References cited:
- EP-A- 0 892 165
- GB-A- 2 083 135
- US-A- 4 833 886
- PATENT ABSTRACTS OF JAPAN vol. 1999, no. 01, 29 January 1999 (1999-01-29) & JP 10 266866 A (ISUZU MOTORS LTD), 6 October 1998 (1998-10-06)
- PATENT ABSTRACTS OF JAPAN vol. 1998, no. 02, 30 January 1998 (1998-01-30) & JP 09 268950 A (TOYOTA MOTOR CORP), 14 October 1997 (1997-10-14)

## Description

### 1. Field of the invention

The present invention relates to a control apparatus of an engine having a turbo supercharger, which is mounted on an automobile or the like.

### 2. Description of the prior art

As described, for example, in the Japanese laid-open patent publication No. 10-47070, the Japanese registered utility model publication No. 2573107 and so on, there has been conventionally known an engine having a turbo supercharger, which is provided with a variable wing for forming a nozzle capable of changing its openness to a turbine of the turbo supercharger so that the turbine efficiency can be controlled by adjusting the openness of the variable wing in accordance with working conditions of the engine so as to change an exhaust gas flow area to the turbine.

In the engine having the turbo supercharger provided with the variable wing described above, generally, the control of the variable wing, which responds to the working conditions, is performed in such a manner that the openness of the variable wing is made smaller so as to raise the supercharging efficiency when the engine is in the state of lower rotating speed, while the openness of the variable wing is made larger when the engine is in the state of higher rotating speed in which the amount of exhaust gas is larger. However, according to the controlling method of the variable wing described above, if the openness of the accel is made smaller so as to be caused deceleration of the engine in such a state that the openness of the variable wing is large in the working state of high rotating speed (namely, when the engine becomes in the state of deceleration with fuel cut so that fuel injection is stopped), the supercharging pressure may be largely lowered due to rapid decrease of exhaust gas energy fed into the turbine of the turbo supercharger. Thus, when the engine is accelerated again in the above-mentioned state, increase of the supercharging pressure becomes slow so that the acceleration efficiency may be deteriorated.

A diesel engine having a turbo supercharger, which is mounted on a manual transmission type of automobile with a clutch, described in the Japanese registered utility model publication No. 2573107, is provided with an accel sensor, a clutch sensor and a controller for controlling a variable wing. In the above-mentioned diesel engine, decrease of supercharging pressure is restrained by controlling the variable wing in such a manner that the openness of the variable wing is made smaller when the openness of the accel is zero or the transmission gear is changed while releasing the clutch. Accordingly, when the accel is operated (stamped) after changing the transmission gear, increase of the supercharging pressure is promoted so that it is intended to reduce smoke and improve response during acceleration. Thus, based on the above-mentioned conventional technique, it may be thought of such a technique to make the openness of the variable wing smaller also when the engine is decelerated in the state of higher rotating speed.

However, even if the engine is decelerated in the state of low load, the amount of the exhaust gas is comparatively large in the state of high rotating speed. Therefore, even if the openness of the variable wing is merely made smaller, flow of the exhaust gas is unnecessarily restrained so that the exhaust pressure is elevated to excess, thereby improvement of the supercharging efficiency is rather prevented.

On the other hand, there has been generally known an exhaust gas reflux device provided with an exhaust gas reflux passage connecting an exhaust passage to an intake passage and an exhaust gas reflux valve for adjusting the amount of the reflux gas, disposed in the exhaust gas reflux passage. However, in the above-mentioned conventional engine having the turbo supercharger provided with the variable wing, the relation between the control of the variable wing and the control of the exhaust gas reflux valve during deceleration has not been sufficiently considered.

### SUMMARY OF THE INVENTION

In view of the above-mentioned circumstances, the present invention intends to provide a control apparatus of an engine having a turbo supercharger, which can effectively raise supercharging efficiency by controlling both of a variable wing and an exhaust gas reflux valve so as to improve accelerating efficiency of the engine by promoting increase of supercharging pressure when the engine is accelerated again.

According to the present invention, there is provided a control apparatus of an engine having a turbo supercharger which includes a variable wing disposed in an exhaust passage, for changing an exhaust gas flow area to a turbine of the turbo supercharger, and an exhaust gas reflux passage for connecting a portion of the exhaust passage to an intake passage. The portion is located at an upstream position relative to the variable wing. The exhaust gas reflux passage is provided with an exhaust gas reflux valve for adjusting a reflux flow of an exhaust gas therein. The control apparatus is characterized in that the control apparatus includes a working condition detector for detecting working conditions of the engine and a controller for controlling the variable wing and exhaust gas reflux valve in accordance with the working conditions detected by the working condition detector. Hereupon, the controller makes the variable wing move toward a more closed state when the engine is decelerated in a loaded working region in which the variable wing is opened at least partially. Further, the controller makes the exhaust gas reflux valve close under a predetermined working state in accordance with the working conditions in time of said deceleration of the engine.

In the above-mentioned apparatus, when the engine is decelerated in the loaded working region, the supercharging efficiency is raised by making the variable wing move toward more closed state and controlling the exhaust gas reflux valve in accordance with the working conditions. Therefore, falling of the supercharging pressure is restrained so that increase of the supercharging pressure is hastened when the engine is accelerated again.

In the apparatus according to the present invention, it is preferable that the controller makes the variable wing move toward the more closed state, and makes the exhaust gas reflux valve move toward a more closed state so as to make a supercharging efficiency of the turbo supercharger become larger, when the engine is decelerated in a low rotation region in which a rotating speed of the engine is lower than or equal to a predetermined rotating speed.

If so, the operation to restrain falling of the supercharging pressure is raised by closing the variable wing and the exhaust gas reflux valve, when the engine is decelerated in the predetermined state from the low rotation region to the middle rotation region. Further, because the exhaust gas quantity in the low or middle rotation region is smaller than that in the high rotation region, the exhaust pressure does not become higher to excess when the exhaust gas reflux valve is closed.

Further, the control apparatus may be constructed as follows. That is, the engine includes an intake pressure sensor for detecting a pressure of an intake air. The controller performs a feedback control of the variable wing in such a manner that an actual supercharging pressure detected by the intake pressure sensor follows a target supercharging pressure, which is set in accordance with a required load, in a loaded working region before the engine is decelerated. Then, the controller stops the feedback control of the variable wing when the engine is decelerated in said state that the feedback control is being performed. After that, the controller re-starts the feedback control of the variable wing when the engine is accelerated again in said state that the feedback control is being stopped, in accordance with an increase of the target supercharging pressure after said acceleration is started. For example, the controller re-starts the feedback control of the variable wing at a timing that the actual supercharging pressure becomes lower than the target supercharging pressure when the engine is accelerated again in said state that the feedback control is being stopped.

In this case, when the engine is accelerated again after the deceleration, the feedback control is stopped not so as to lower the actual supercharging pressure in correspondence with the target supercharging pressure when the target supercharging pressure is lower than the actual supercharging pressure. Then, if the target supercharging pressure rises up to the actual supercharging pressure, the feedback control is re-started so that the actual supercharging pressure follows the target supercharging pressure.

In the control apparatus, it is preferable that the controller performs a feedback control of the exhaust gas reflux valve in such a manner that an air fuel ratio follows a target air fuel ratio in a loaded working region before the engine is decelerated, stops the feedback control of the exhaust gas reflux valve when the engine is decelerated in the state that the feedback control is being performed, and re-starts the feedback control of the exhaust gas reflux valve when the engine is accelerated again in the state that the feedback control is being stopped, in accordance with an increase of a fuel injection quantity.

If so, when the engine is decelerated and the fuel injection quantity is smaller, the feedback control is stopped so that there may be maintained a condition which is advantageous for restraining fall of the supercharging pressure. Thus, when the fuel injection quantity increases, the feedback control of the exhaust gas reflux valve is re-started in order to prevent deterioration of the emission efficiency. Because, the fall of the supercharging pressure is not caused even if the exhaust gas is released to the exhaust gas reflux passage a little in correspondence with increase of energy of the exhaust gas.

Hereupon, the controller may re-starts the feedback control of the variable wing when the engine is accelerated again within a predetermined time from a timing that the engine is judged to be decelerated. If so, the operation to restrain the fall of the supercharging pressure during the deceleration process may effectively contribute increase of the supercharging pressure when the engine is accelerated again.

Moreover, in the control apparatus, it is preferable that the engine includes an intake pressure sensor for detecting a pressure of an intake air. Thus, it is preferable that the controller performs a feedback control of the variable wing in such a manner that an actual supercharging pressure detected by the intake pressure sensor follows a target supercharging pressure which is set in accordance with a required load, in a loaded working region, and further performs the feedback control of the variable wing when the engine is decelerated in the loaded working region. Hereupon, the feedback control of the variable wing performed when the engine is decelerated, is performed in such a manner that a change of the target supercharging pressure has a first order lag to a change of the requested load.

In this case, even if the target supercharging pressure rapidly falls when the engine is decelerated, the calculated values of the first order lag decrease slowly. Therefore, the variable wing is actuated toward the more closed state by the feedback control such that the actual supercharging pressure follows the calculated values of the first order lag, thereby the fall of the supercharging pressure is restrained.

In the control apparatus, it is preferable that the controller performs the feedback control of the variable wing, in which the change of the target supercharging pressure has the first order lag to the change of the requested load, when the engine is decelerated in a fuel cut state. If so, the stability of the engine is raised by continuing the feedback control while making the target supercharging pressure even during the fuel cut process which does not have direct relation with the emission efficiency.

Moreover, in the control apparatus, it is preferable that it is constructed as follows. That is, the engine includes a throttle valve disposed at a downstream position relative to a compressor of the turbo supercharger in an intake passage and an intake pressure sensor for detecting a pressure of an intake air at a downstream position relative to the throttle valve. Hereupon, the controller performs a feedback control of the variable wing in such a manner that an actual supercharging pressure detected by the intake pressure sensor follows a target supercharging pressure which is set in accordance with a required load, in a loaded working region. The controller also performs the feedback control of the variable wing when the engine is decelerated in the loaded working region. Further, the controller makes the throttle valve move toward a more closed state in the state that the engine is decelerated.

If so, when the engine is decelerated, the intake air pressure at the downstream position relative to the throttle valve rapidly falls. Thus, the variable wing is actuated to move toward the more closed state by performing the feedback control of the throttle valve in accordance with the deviation between the above-mentioned pressure and the target supercharging pressure, thereby the fall of the supercharging pressure is restrained.

Further, in the control apparatus, it is preferable that it is constructed as follows. That is, the controller opens the variable wing when the engine is working in a region of high rotating speed and high load. Further, the controller closes the variable wing and opens the exhaust gas reflux valve at least partially when the engine is working in a region of high rotating speed and deceleration.

In this apparatus, because rapid decrease of working quantity of the turbo supercharger is restrained during the deceleration process in the high rotation region, the supercharging efficiency is advantageously improved when the engine is accelerated again. That is, in the higher load region within the high rotation region, the variable wing is opened. Thus, when the engine is decelerated in the above-mentioned state, the supercharging pressure rapidly falls due to decrease of the working quantity of the supercharger if the variable wing is being opened, because energy of the exhaust gas decreases. However, in the present apparatus, by closing the variable wing, the supercharging efficiency is raised so that rapid fall of the supercharging pressure is restrained. In this case, the flow rate of the exhaust gas is comparatively larger in the high rotating region even if the engine is decelerated. However, because a part of the exhaust gas is released to the exhaust gas reflux passage by opening the exhaust gas reflux valve at least partially, the exhaust pressure is prevented from rising to excess so that the supercharging pressure is effectively raised. Further, because the supercharging efficiency is raised during the deceleration process so that fall of the supercharging pressure is restrained as described above, the supercharging pressure is rapidly raised when the engine is accelerated again directly after the deceleration.

In the control apparatus, it is preferable that the controller wholly opens the exhaust gas reflux valve, when the engine is working in a region of high rotating speed and deceleration with fuel cut, and temperature of the engine is higher than a predetermined value. That is, when the engine is working in the high rotation region and the temperature of the engine is high, the temperature of each of the exhaust gas reflux passage and the portion of the intake passage, to which the exhaust gas reflux passage is connected, is also high because the exhaust gas of high temperature is refluxed. In the circumstances, when the engine enters the fuel cut deceleration region, the above-mentioned operation to cool the exhaust gas reflux passage and so on is raised by wholly opening the exhaust gas reflux valve. Therefore, when the engine is accelerated again, the temperature of the intake air is lowered so that sufficient operation to raise the charging efficiency may be achieved.

In the control apparatus, if the exhaust gas reflux passage is provided with a reflux gas cooler for cooling a reflux gas which passes through the passage, the reflux gas cooler is cooled when the exhaust gas reflux valve is opened during the fuel cut deceleration process. Accordingly, the cooling function of the reflux gas cooler may be advantageously recovered.

Hereupon, it is preferable that the engine includes a throttle valve disposed at a downstream position relative to a compressor of the turbo supercharger in an intake passage, the exhaust gas reflux passage being connected to the intake passage at a downstream position relative to the throttle valve. Further, it is preferable that the controller performs a control of the throttle valve in such a manner that the throttle valve opens in a working region of high rotating speed and deceleration with fuel cut, in addition to the control of the variable wing and exhaust gas reflux valve. If so, the supercharging condition and the re-acceleration performance during the fuel cut deceleration process may be improved. That is, if the throttle valve is actuated to move toward more closed state on occasion demands when the exhaust gas reflux is performed in the regions other than the fuel cut region, the valve promotes the exhaust gas reflux. However, when the variable wing is controlled so as to raise the supercharging efficiency by closing itself in the fuel cut deceleration region, the throttle valve may prevent the supercharging operation or cause surging by raising the pressure between the compressor of the turbo supercharger and the throttle valve. In order to prevent the above-mentioned matter, the throttle valve is opened.

In the control apparatus, it is preferable that the controller controls the exhaust gas reflux valve in such a manner that the lower the rotating speed of the engine is, the smaller an openness of the exhaust gas reflux valve is, in a region of deceleration with fuel cut from a low rotating state to a high rotating state. That is, because the smaller the engine rotating speed becomes, the smaller the flow rate of the gas flowing from the engine to the exhaust passage becomes, the supercharging efficiency may be raised by lowering the quantity of the gas released to the exhaust passage in accordance with the rotating speed.

In the control apparatus, if the controller makes the exhaust gas reflux valve close when the engine is 5 accelerated again, smoke is reduced and the acceleration performance is improved advantageously due to increase of fresh air.

### BRIEF DESCRIPTION OF THE DRAWINGS

The present invention will become more fully understood from the detailed description given below and the accompanied drawings, wherein:
Fig. 1 is a rough schematic view showing an engine having a turbo supercharger provided with a control apparatus according to the present invention, as an embodiment;
Figs. 2A and 2B are schematic views, each of which shows a construction of a portion near a variable wing in VGT of the supercharger, as an example;
Fig. 3 is a block diagram showing a concrete construction of a control unit of the engine;
Fig. 4 is a view explaining divided working regions for the control in accordance with working conditions;
Fig. 5 is a flowchart showing an example of the control of VGT etc. during deceleration process;
Fig. 6 is a flowchart showing another example of the control of VGT etc. during deceleration process;
Fig. 7 is a flowchart showing a further example of the control of VGT etc. during deceleration process;
Fig. 8 is a time chart showing time-dependent changes of supercharging pressure and amount of intake air when the engine is accelerated again after deceleration process;
Fig. 9 is a flowchart showing a further example of the control of VGT etc. during deceleration process;
Fig. 10 is a flowchart showing a further example of the control of VGT etc. during deceleration process; and
Fig 11 is a flowchart showing an example of the feedback control of openness of VGT.

### DETAILED DESCRIPTION OF THE PREFERRED EMBODIMENTS

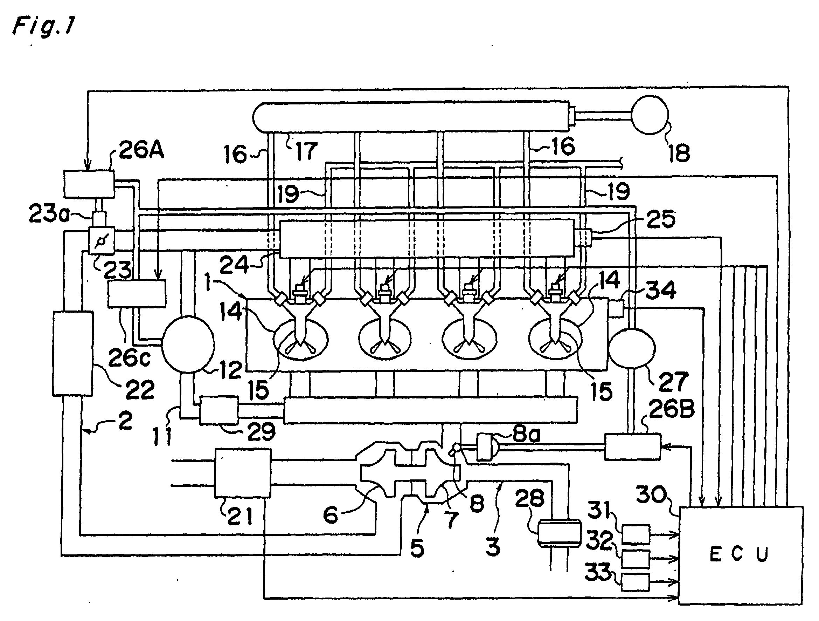

Fig. 1 shows an engine having a turbo supercharger provided with a control apparatus according to the present invention, as an embodiment. The engine shown in the figure is a diesel engine. Each of an intake passage 2 and an exhaust passage 3 is connected to a main body 1 of the engine. Further, the engine is provided with the turbo supercharger 5 having a compressor 6 disposed in the intake passage 2, a turbine 7 disposed in the exhaust passage 3, for driving the compressor 6 using energy of exhaust gas, and a variable wing 8 described later. Moreover, the engine is provided with an EGR device (exhaust gas reflux device) having an EGR passage (exhaust gas reflux passage) 11 connecting (communicating) the exhaust passage 3 to the intake passage 2 and an EGR valve (exhaust gas reflux valve) 12 disposed in the EGR passage 11.

Further, the construction of each of portions of the engine will be concretely described. Each of cylinders 14 of the main body 1 of the engine is provided with a fuel injector 15 with plural nozzles, for injecting fuel into a combustion chamber. The fuel inlet portion of each of the fuel injectors 15 is connected to a common rail (common pipe) 17 through a distribution passage 16. Further, the common rail 17 is connected to a fuel injection pump 18, in consequence, the fuel fed to the common rail 17 by the fuel injection pump 18 is pressurized therein and then transported to each of the fuel injector 15. Each of the fuel injectors 15 has such a construction that it can control fuel injecting time and fuel injecting timing in accordance with control signals. The fuel outlet portion of each of the fuel injectors 15 is connected to a fuel return passage 19.

In the intake passage 2, there are disposed, by turns from the upstream to the downstream, an air flow sensor (detector for detecting amount of intake air flow) 21, the compressor 6 of the turbo supercharger 5, an inter cooler 22, a throttle valve 23, a surge tank 24 to which an intake pressure sensor (intake air pressure detector) 25 is provided.

The throttle valve 23, which throttles the intake passage 2 for the purpose of promoting introduction of EGR in a specific working state and so on, is actuated by an actuator 23a which is driven by negative pressure. The actuator 23a is connected to a vacuum pump 27 through a solenoid valve 26A. Thus, when the solenoid valve 26A is controlled by duty, the mutual ratio of the negative pressure and the atmospheric pressure, each of which is introduced into the actuator 23a, is adjusted, thereby the openness of the throttle valve 23 is controlled.

Further, in the exhaust passage 3, there are disposed the turbine 7 of the turbo supercharger 5 and a catalytic converter 28.

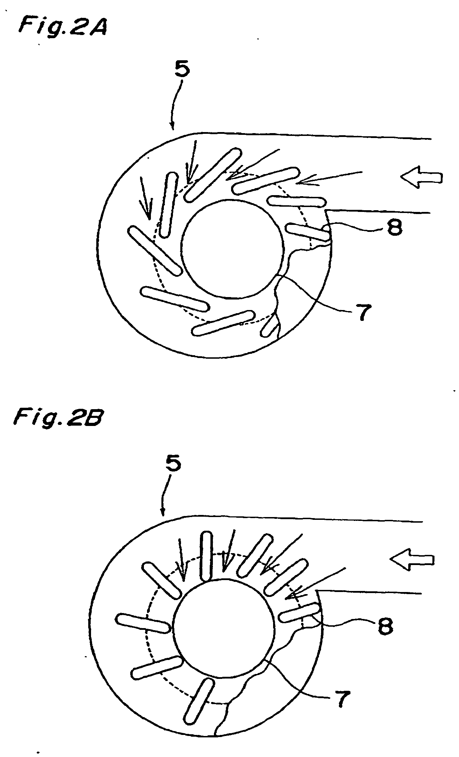

As shown in Figs. 2A and 2B, the turbo supercharger 5 is composed of a VGT (variable geometry turbo) having many variable wings 8 which form nozzles around the turbine 7. That is, the turbo supercharger 5 (Hereinafter, it will be referred to "VGT 5".) can change the openness of each of the variable wings 8, namely the opening area of the nozzle (exhaust gas flow area to the turbine) within the range from the wholly closed state (minimum flow area) shown in Fig. 2A to the wholly opened state (maximum flow area) shown in Fig 2B, thereby the turbine efficiency is controlled.

As shown in Fig. 1, the variable wings 8 are actuated by an actuator 8a which is driven by negative pressure. The actuator 8a is connected to the vacuum pump 27 through a solenoid valve 26B. Thus, when the solenoid valve 26B is controlled by duty, the mutual ratio of the negative pressure and the atmospheric pressure, each of which is introduced into the actuator 8a, is adjusted, thereby the openness of the variable wings 8 of the VGT 5 is controlled.

Meanwhile, one end portion of the EGR passage 11 is connected to a portion of the exhaust passage 3 at an upstream position relative to the turbine 7, for example to the portion where exhaust manifolds are aggregated, while the other end portion is connected to a portion of the intake passage 2 at a downstream position relative to the throttle valve 23, for example to the surge tank 24 or an upstream portion thereof. In the EGR passage 11, there are disposed an EGR cooler (exhaust reflux gas cooler) 29 and the EGR valve 12. The EGR cooler 29, which cools the exhaust reflux gas passing through the EGR passage 11, is composed of a water-cooled type cooler, for example, to which cooling water of the engine is introduced.

The EGR valve 12 is connected to the vacuum pump 27 through a solenoid valve 26C which can be controlled by duty. Thus, when the solenoid valve 26C is controlled by duty, the mutual ratio of the negative pressure and the atmospheric pressure, each of which is introduced into the negative pressure chamber of the EGR valve 12, is adjusted, thereby the openness of the EGR valve 12 is controlled.

Control signals are outputted from a control unit (ECU) 30 to the fuel injector 15 and each of the solenoid valves 26A, 26B and 26C. To the ECU 30, there are inputted signals which are outputted from the air flow sensor 21, the intake pressure sensor 25, an accel sensor 31 for detecting the openness of an accel, a crank angle sensor 32 for detecting the crank angle of the engine, a common rail pressure sensor 33 for detecting the pressure of fuel in the common rail 17, a water temperature sensor 34 for detecting the temperature of cooling water of the engine and so on.

Thus, the fuel injection quantity and fuel injection timing of the fuel injector 15 are controlled in accordance with the control signals outputted from the ECU 30 to the fuel injector 15. Further, the throttle valve 23, the variable wings 8 of the VGT 5 and the EGR valve 12 are controlled in accordance with the control signals (duty signals) outputted from the ECU 30 to the solenoid valves 26A, 26B and 26C, respectively.

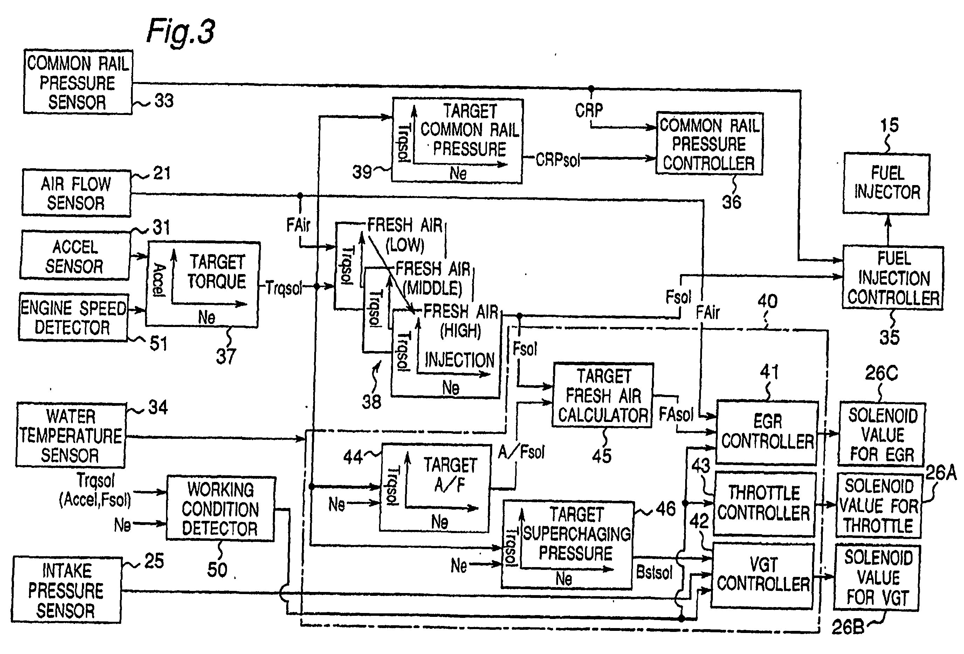

As shown in Fig. 3, the ECU 30 is provided with a fuel injection quantity controller 35 for controlling the fuel injection quantity of the fuel injector 15, a common rail pressure controller 36 for controlling the pressure of the fuel in the common rail 17, a working condition detector 50, and a combined controller 40 for controlling the variable wings 8 of the VGT 5, the EGR valve 12 and the throttle valve 23 in accordance with working conditions detected by the working condition detector 50.

The fuel injection quantity controller 35 reads target torque Trqsol of the engine from a map 37 which has been previously set, on the basis of the accel openness Accel detected by the accel openness sensor 31, and the engine rotating speed Ne detected by an engine rotating speed detector 51 by means of measurement of the period (cycle) of the crank angle signals and so on. Further, the controller 35 also reads target fuel injection quantity Fsol from a three dimensional map 38 which has been previously set, on the basis of the target torque Trqsol, the engine rotating speed Ne and an actual fresh air quantity FAir detected by the air flow sensor 21. Thus, the controller 35 controls the fuel injection quantity by adjusting the time in which the fuel injector 15 is being magnetically excited (magnetized), on the basis of the target fuel injection quantity Fsol and the fuel pressure CRP in the common rail 17 detected by the common rail pressure sensor 21.

The common rail pressure controller 36 reads target common rail pressure CRPsol from a map 39 which has been previously set, on the basis of the target torque Trsol and the engine rotating speed Ne. Thus, the controller 36 controls a not-shown fuel pressure adjuster provided in the fuel system, on the basis of the target common rail pressure CRPsol and the detected fuel pressure CRP.

Further, the combined controller 40 includes an EGR controller 41, a VGT controller 42 and a throttle valve controller 43.

The EGR controller 41 performs feed back control to the EGR valve 12 in such a manner that the air fuel ratio follows the target air fuel ratio A/Fsol when the engine is steadily working at least in the state of partial load. That is, when the feedback control is performed, the target air fuel ratio A/Fsol is read from a map 44 which has been previously set on the basis of the target torque Trqsol and the engine rotating speed Ne. Further, by a target fresh air quantity calculator 45, there is calculated target fresh air quantity FAsol for the fresh air drawn into the combustion chamber of the main body 1 of the engine, on the basis of the target air fuel ratio A/Fsol and the target fuel injection quantity Fsol. Then, the calculated value of the target fresh air quantity FAsol and the actual fresh air quantity FAir detected by the air flow sensor 21 are inputted to the EGR controller 41.

Thus, the EGR controller 41 outputs control signals (duty signals), which correspond to the deviation between the target fresh air quantity FAsol and the actual fresh air quantity FAir, to the solenoid valve 26C for actuating the EGR valve 12, thereby controls the openness of the EGR valve 12 by means of feedback control so as to diminish the deviation. Hereinafter, the above-mentioned control will be referred to "air flow feedback control".

The VGT controller 42 performs feedback control to the variable wings 8 of the VGT 5 in such a manner that the supercharging pressure follows the target supercharging pressure when the engine is steadily working at least in the state of partial load. That is, the target supercharging pressure Bstsol is read from a map 46 which has been previously set on the basis of the target torque Trqsol and the engine rotating speed Ne. Further, the target supercharging pressure Bstsol and the actual supercharging pressure Bst detected by the intake pressure sensor 24 are inputted to the VGT controller 42. Thus, the VGT controller 42 outputs control signals (duty signals), which correspond to the deviation between the actual supercharging pressure Bst and the target supercharging pressure Bstsol, to the solenoid valve 26B for actuating the VGT 5, thereby controls the openness of the variable wings 8 by means of feedback control so as to diminish the deviation. Hereinafter, the above-mentioned control will be referred to "supercharging pressure feedback control".

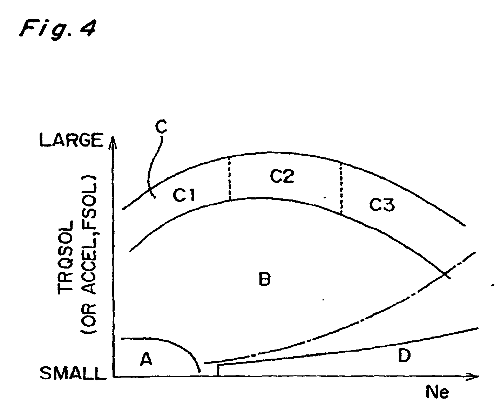

In the present embodiment, the EGR controller 41 and the VGT controller 42 perform the air flow feedback control and the supercharging pressure feedback control in accordance with the working conditions detected by the working condition detector 50 when the engine is working in the partially loaded region B shown in Fig. 4. On the other hand, the controllers 41 and 42 perform open loop control in accordance with the working conditions when the engine is working in the idle region A, the highly loaded region C and the deceleration region (the region of deceleration with fuel cut) D.

That is, the working condition detector 50 detects the working conditions on the basis of the value corresponding to the load of the engine (target torque Trqsol, openness of the accel Accel or target fuel injection quantity Fsol) and the engine rotating speed Ne. In order to perform the control on the basis of detecting the working conditions, the working region of the engine has been previously divided into the idle region A, the partially loaded region B, the highly loaded region C and the fuel cut deceleration region D, as shown in Fig. 4

In the idle region A, the variable wings 8 of the VGT 5 are wholly closed, while the EGR valve 12 is wholly opened. Meanwhile, in the highly loaded region C, the EGR valve 12 is closed in order to prevent decrease of output power of the engine due to the EGR. Further, in the highly loaded region C, as the control of the VGT 5, the variable wings 8 are wholly closed in the region Cl of low rotating speed in order to raise the supercharging efficiency, while they are wholly opened in the region C3 of high rotating speed, in which the flow rate of exhaust gas is larger, in order to prevent surging. Moreover, the openness of the variable wings 8 made larger in accordance with increase of the rotating speed of the engine in the region C2 of middle rotating speed.

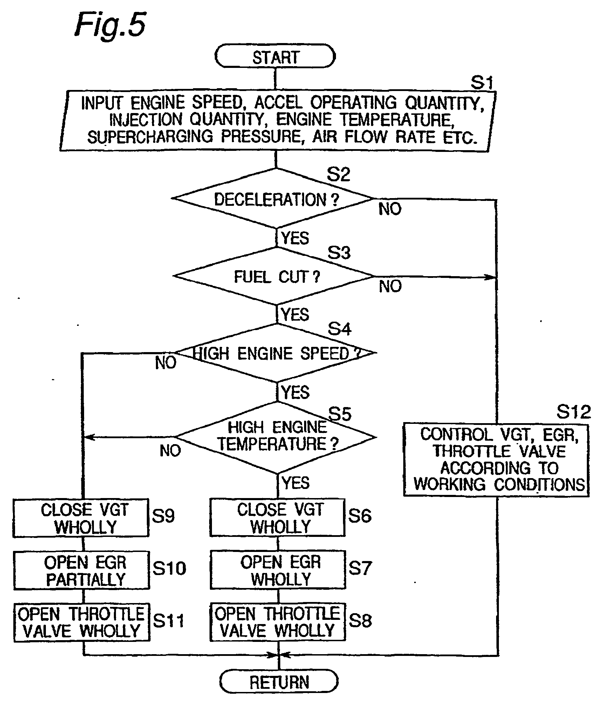

The fuel cut deceleration region D is a specified region, which exists in a higher rotating area relative to a predetermined value, including the accel closed area and a low loaded area near the accel closed area, within the deceleration region which exists in a lower loaded area relative to the no-load line (dashed line in Fig. 4). In the region D, in which feeding of the fuel is stopped, the variable wings 8 of the VGT 5 are closed, while the EGR valve 12 is opened at least partially. In the present embodiment, as described in the flowchart shown in Fig. 5 described later, the openness of the EGR valve 12 is changed in accordance with the engine rotating speed and the engine temperature detected by the water temperature sensor 34 when the engine is working in the fuel cut deceleration region D.

Hereupon, the throttle valve controller 43 controls the throttle valve 23 in accordance with the working conditions, for example, in such a manner that it makes the throttle valve 23 move toward more closed state in the working region in which the EGR is fed, while making the throttle valve 23 open in the fuel cut deceleration region.

Hereinafter, an example of the control by the combined controller 40 will be described with reference to the flowchart shown in Fig. 5.

When the process according to the flowchart starts, at first in Step S1. there are read engine rotating speed Ne, accel openness Accel, fuel injection quantity, engine temperature (temperature of the cooling water of the engine), supercharging pressure (intake air pressure) Bst, output values of the air flow sensor 21 and so on. Next, it is judged whether the engine is working in the deceleration state or not in Step S2. If the engine is working in the deceleration state, it is further judged whether the engine is working in the fuel cut deceleration region D or not in Step S3.

If the engine is working in the fuel cut deceleration region D, it is judged whether the engine is working in the high rotation region within the fuel cut deceleration region D or not in Step S4. If the judgement is YES, it is judged whether the engine is in the high temperature state that the engine temperature is higher than a predetermined value or not in Step S5.

If the engine is working in the high rotation region within the fuel cut deceleration region D and is in the high temperature state, the variable wings 8 of the VGT 5 are wholly closed, while both of the EGR valve 12 and the throttle valve 23 are wholly opened in Steps S6 to S8. If the engine is working in the low or middle rotation region within the fuel cut deceleration region D or the engine temperature is lower than the above-mentioned predetermined value, the variable wings 8 of the VGT 5 are wholly closed, while the EGR valve 12 is partially opened and the throttle valve 23 is wholly opened in Steps S9 to S11.

Hereupon, in the regions other than the fuel cut deceleration region D, the VGT 5, EGR valve 12 and throttle valve 23 are controlled in accordance with the working conditions and so on. For example, as described above, in the partial load region B, the air flow feedback control and supercharging pressure feedback control are performed, and further the throttle valve 23 is made move toward more closed state as occasion demands. In the idle region A, the EGR valve 12 is opened, while the variable wings 8 of the VGT 5 are closed, and further the throttle valve 23 is made move toward more closed state as occasion demands. In the high load region C, the EGR valve 12 is closed, while the throttle valve 23 is opened, and further the variable wings 8 of the VGT 5 are closed in the lower rotating state and opened in the higher rotating state.

According to the above-mentioned apparatus of the present embodiment, the exhaust pressure is prevented from being raised to excess so that surging may be prevented, because in the high rotation and high load region, in order to advantageously improve the output power, the EGR valve 12 is closed so that the EGR is stopped, and each of the throttle valve 23 and the variable wings 8 of the VGT 5 is opened. Further, in the high rotation and high load region, in which energy of the exhaust gas is larger, high supercharging efficiency may be achieved in the state that the variable wings 8 are opened. Meanwhile, in the partial load region, in order to adequately adjust the EGR quantity and the fresh air quantity so as to achieve air fuel ratio capable of reducing NOx and smoke, the openness of the EGR valve 12 is controlled by means of the air flow feedback control. Further, the openness of the variable wings 8 of the VGT 5 is controlled by means of the supercharging pressure feedback control so as to achieve adequate supercharging pressure.

When deceleration operation is performed in the high rotation and high load region C or partial load region B described above, energy of the exhaust gas is reduced due to decrease of load, particularly is rapidly reduced due to stop of fuel feeding if the working state of the engine goes into the fuel cut deceleration region D. However, in this case, decrease of the supercharging pressure is restrained by closing the variable wings 8 of the VGT 5. That is, the variable wings 8 are generally opened in the high rotation region according to the conventional control method of the VGT 5. On the other hand, according to the apparatus of the present embodiment, the variable wings 8 are closed in the fuel cut region D within the high rotation region so that the supercharging efficiency is raised. In consequence, deterioration of the supercharging operation due to decrease of energy of the exhaust gas is restrained so that the decrease of the supercharging pressure becomes slow.

Meanwhile, when the engine is working in the fuel cut region, the EGR valve 12 is at least partially opened, thereby the exhaust pressure is adjusted not so as to raise to excess in the state that the variable wings 8 of the VGT 5 are closed. Namely, because the quantity of the gas (air), which is exhausted from the engine to the exhaust passage, is comparatively larger in the high rotation region even if it is within the fuel cut region, the exhaust pressure tends to increase easily due to closing of the variable wings 8 of the VGT 5. However, because a part of the gas which flows in the exhaust passage is released to the EGR passage 11 by opening the EGR valve 12, the exhaust pressure is prevented from increasing to excess. Hereupon, the gas, which flows from the main body 1 of the engine to the exhaust passage 3 during the fuel cut process, is fresh air. Therefore, when the fresh air is refluxed to the intake passage 2 through the EGR passage 11, there may be achieved such an operation that the EGR passage 11, the EGR cooler 29 disposed in the passage 11, the surge tank 24 in the intake system and so on are cooled thereby.

When the engine is accelerated again by performing acceleration operation (accel stamping) in the fuel cut deceleration region D, the accelerating responsibility may be raised while restraining to produce smoke by controlling the variable wings 8 of the VGT 5 and the EGR valve 12 in the manner described above during the fuel cut deceleration process. That is, because decrease of the supercharging pressure is restrained by closing the variable wings 8 of the VGT 5 during the fuel cut deceleration process, the supercharging pressure is rapidly raised when the engine is accelerated again. Further, because the EGR system and the air intake system are cooled by making the EGR valve 12 open during the fuel cut deceleration process, the temperature of the intake air is lowered so that the density of the intake air is increased when the engine is accelerated again. Due to the above-mentioned operations, the charging efficiency of fresh air is raised when the engine is accelerated again. In consequence, the fuel injection quantity can be increased while restraining to produce smoke, thereby the acceleration efficiency is raised.

Particularly, in the example shown in Fig. 5, the exhaust pressure, the cooling operation and so on may be adequately adjusted by controlling the EGR valve 12 in accordance with the engine rotating speed and the engine temperature while wholly closing the variable wings 8 of the VGT 5 in the fuel cut deceleration region. That is, when the engine is working in the high rotation region within the fuel cut region and in high temperature state, the exhaust pressure tends to easily rise and further the density of intake air (charging efficiency) tends to fall due to rising of the temperature of intake air when the engine is accelerated again. Therefore, the operation to restrain rising of the exhaust pressure and the operation to cool the EGR system and the intake air system are raised by wholly opening the EGR valve 12. Meanwhile, when the engine is working in the low or middle rotation region within the fuel cut deceleration region or in the state of lower temperature even if it is in the high rotation region, the gas released from the exhaust passage 3 to the EGR passage 11 is decreased in comparison with that in the state of lower engine temperature in the high rotation region within the fuel cut deceleration region by partially opening the EGR valve 12, thereby the operation to restrain the falling of the supercharging pressure is raised.

Meanwhile, by wholly opening the throttle valve 23 in the fuel cut deceleration region, it may be prevented such a matter that the throttle valve 23 prevents the supercharging operation, or the intake pressure between the compressor 6 of the turbo supercharger 5 and the throttle valve 23 rises to excess so as to cause surging.

Hereupon, although in the control when the engine is accelerated again, the variable wings 8 of the VGT 5, the EGR valve 12 and the throttle valve 23 may be controlled in accordance with the working conditions after acceleration, it may be preferable to wholly close the EGR valve 12 and to wholly open the throttle valve 23, in order to improve the acceleration efficiency and to reduce smoke by increasing fresh air quantity.

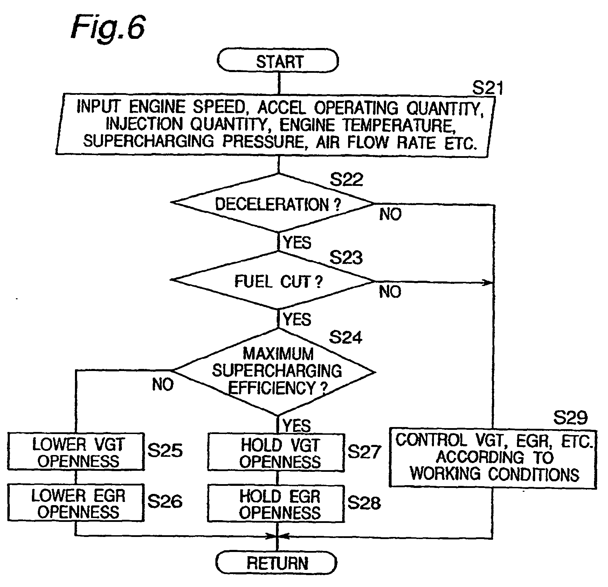

Fig. 6 shows a flowchart of another example of the control by means of the combined controller 40. In the flowchart, the operation to input various signals in Step S21, the operation to judge whether the engine is decelerating or not in Step S22 and the operation to judge whether the engine is working in the fuel cut deceleration 5 region or not when it is decelerating in Step S23, are as same as those in Steps S1 to S3 shown in Fig. 5.

If the engine is working in the fuel cut deceleration region D, it is judged whether the supercharging efficiency is maximum or not in Step S24. The supercharging efficiency is obtained from a map which has been previously set, for example, in accordance with the intake air pressure and the intake air quantity.

If the supercharging efficiency is not maximum, the variable wings 8 of the VGT 5 and the EGR valve 12 are controlled so as to move toward more closed states, respectively. That is, for example, if the engine is decelerated in the state that the variable wings 8 of the VGT 5 and the EGR valve 12 are being opened to some degree in the partial load region by means of feedback control, the supercharging efficiency is raised by controlling the variable wings 8 of the VGT 5 and the EGR valve 12 so as to move toward more closed states, respectively. Hereupon, when the working conditions are rapidly changed from the high load region, in which the EGR valve 12 is closed, to the fuel cut deceleration region or the similar case, the openness of the variable wings 8 of the VGT 5 and the openness of the EGR valve 12 may be set to predetermined initial values at first, and then they may be gradually moved toward more closed states.

If it is judged that the supercharging efficiency is maximum in Step S24, the openness of the variable wings 8 of the VGT 5 and the openness of the EGR valve 12 are maintained (held).

Hereupon, in the regions other than the fuel cut deceleration region D, the variable wings 8 of the VGT 5, the EGR valve 12 and so on are controlled in accordance with the working conditions in Step S29. For example, it is examined that the working condition belongs to which region in the partial load region B, the high load region C and the idle region A shown in Fig. 4, and then control corresponding to the examination result is performed.

Hereupon, although the control of the throttle valve 23 is not shown in Fig. 6, it is wholly opened in the fuel cut deceleration region, while it is moved to more closed state as occasion demands when the EGR is performed in the other regions, as same as the example shown in Fig. 5.

According to the above-mentioned control process of the present embodiment, when the working condition of the engine enters the fuel cut deceleration region, the openness of the variable wings 8 of the VGT 5 and the openness of the EGR valve 12 are controlled in such a manner that the supercharging efficiency becomes maximum. Accordingly, if energy of the exhaust gas is rapidly reduced due to the fuel cut deceleration operation, falling of supercharging pressure may be restrained such that it becomes smaller as possible as it can. Therefore, when the engine is accelerated again in the fuel cut deceleration region, the supercharging pressure may be rapidly raised. In consequence, the fuel injection quantity is increased while restraining to produce smoke by increasing fresh air, thereby the acceleration efficiency may be raised.

Hereupon, in each of the examples shown in Figs. 5 and 6, the control in which the variable wings 8 of the VGT 5 is closed and the EGR valve 12 is opened at least partially, or the control in which the variable wings 8 of the VGT 5 and the EGR valve 12 are moved toward more closed states till the supercharging pressure becomes maximum, is performed in the fuel cut deceleration region D. However, the above-mentioned control may be performed in the deceleration region other than the fuel cut deceleration region D. That is, when the engine is decelerated in the loaded region in which the variable wings 8 of the VGT 5 are opened at least partially, energy of the exhaust gas tends to decrease rapidly due to falling of the load (decrease of fuel injection quantity) even if it is decelerated in the fuel fed state (deceleration in the regions other than the fuel cut deceleration region, or deceleration in the engine in which fuel cut is not performed). However, falling of the supercharging pressure is restrained by controlling the variable wings 8 and the EGR valve 12 so as to raise the supercharging efficiency in the above-mentioned deceleration states, thereby increasing of the supercharging pressure is hastened when the engine is accelerated again directly after the deceleration.

Moreover, when the engine is decelerated in the range from the low rotation region, in which the engine rotating speed is lower than or equal to a predetermined value, to the middle rotation region, it may be performed such a control that the variable wings 8 of the VGT 5 are actuated toward the closed state and the EGR valve 12 is closed because the exhaust gas quantity is smaller than that in the high rotation region.

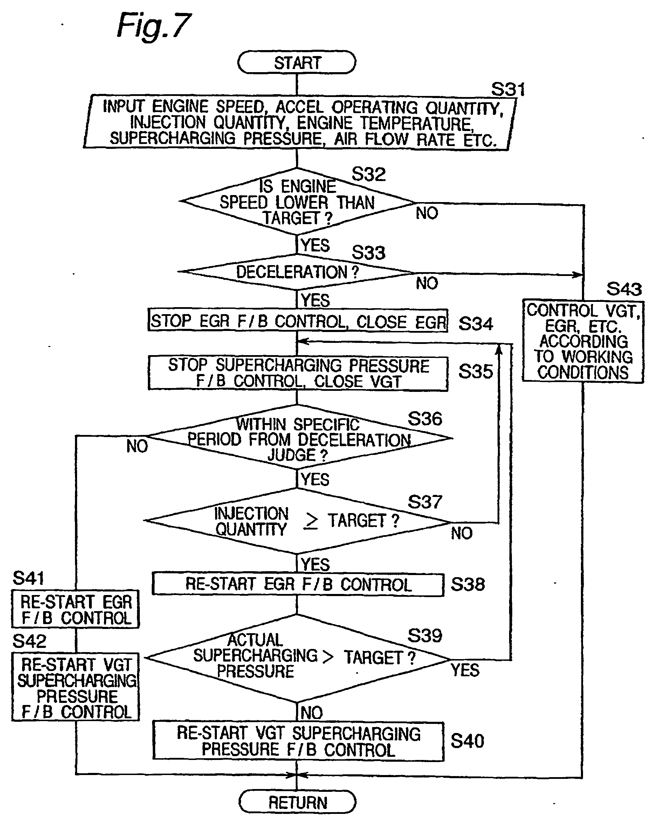

An example of the above-mentioned control will be described with reference to the flowchart shown in Fig. 7.

When the operation described in the flowchart starts, at first in Step S31, there are read signals such as engine rotating speed Ne, accel openness Accel, fuel injection quantity and so on. Following that, in Step S32, it is judged whether the engine rotating speed Ne is in the range from the low rotation region, in which the engine rotating speed is lower than a predetermined rotating speed, to the middle rotation region or not. If the engine rotating speed Ne is lower than the predetermined rotating speed, it is further judged whether the engine is working in the deceleration state or not, for example, by examining the accel openness Accel or the degree of decrease of the target torque, in Step S33.

If it is judged that the engine is working in the deceleration state within the region in which the engine rotating speed Ne is lower than the predetermined rotating speed, the feedback control is stopped and the EGR valve 12 is closed in Step S34 even if the air flow feedback control of the EGR valve 12 has been performed till the time point. Further, even if the supercharging feedback control has been performed till the time point, the feedback control is stopped and the variable wings 8 of the VGT 5 are actuated to move toward the closed state in Step S35.

Following that, in Step S36, it is judged whether it is within a predetermined period from the time point of the judgement of deceleration or not. If the judgement is YES, it is further judged whether the fuel injection quantity is larger than or equal to a predetermined value or not in Step S37. If the judgement in Step S37 is NO, namely if it is within the predetermined period from the judgement of deceleration and it is maintained the deceleration state in which the fuel injection quantity is smaller than the predetermined value, the operation is returned to Step S35, and the operations of Steps S35 to S37 are repeated, thereby both of the EGR valve 12 and the variable wings 8 of the VGT 5 are maintained in the closed states.

If the judgement in Step S37 is YES, the feedback control of the EGR valve 12 is re-started in Step S38, and further it is judged whether the actual supercharging pressure Bst is larger than the target supercharging pressure Bstsol or not in Step S39. If the judgement in Step S39 is YES, namely if it is within the predetermined period from the judgement of deceleration and it is maintained the state in which the fuel injection quantity is larger than or equal to the predetermined value and the actual supercharging pressure Bst is higher than the target supercharging pressure Bstsol, the operation is returned to Step S35, and the operations of Steps S35 to S39 are repeated, thereby the variable wings 8 of the VGT 5 are maintained in the closed states while re-starting the feedback control of the EGR valve 12.

When the engine is accelerated again within the predetermined period from the judgement of deceleration or in the similar case, the target supercharging pressure becomes higher than the actual supercharging pressure so that the judgement in Step S39 becomes NO. In this case, the supercharging pressure feedback control of the VGT 5 is re-started in Step S40.

Meanwhile, if the predetermined period has passed from the judgement of deceleration so that the judgement in Step S36 becomes NO, the feedback control of the EGR valve 12 and the supercharging pressure feedback control of the VGT 5 are re-started in Steps S41 and S42, respectively.

Hereupon, when it is judged that the engine rotating speed is larger than or equal to the set rotating speed in Step S32, or when it is judged that the engine is working in the state other than the deceleration region in Step S33, the operation is moved to Step S43 so that the VGT 5, the EGR valve 12 and so on are controlled in accordance with the working condition. For example, if the engine is working in the partial load region B (see Fig. 4), the air flow feedback control of the EGR valve 12 and the supercharging pressure feedback control of the VGT 5 are performed.

According to the control process of the present embodiment, when the engine is decelerated in the state, in which the VGT 5 and the EGR valve 12 are controlled by the feedback control respectively, in the partial load region within the low or middle rotation region, the variable wings 8 of the VGT 5 are actuated to move toward the closed states and the EGR valve 12 is closed. Accordingly, the operation to restrain fall of the supercharging pressure during the deceleration process is much more improved. Therefore, when the engine is accelerated again (accel is stamped) within the predetermined period from the time point that the working state of the engine has once become the deceleration state (accel is released) in the low or middle rotation region, for example, in time of gear change process, the acceleration responsibility may be highly improved.

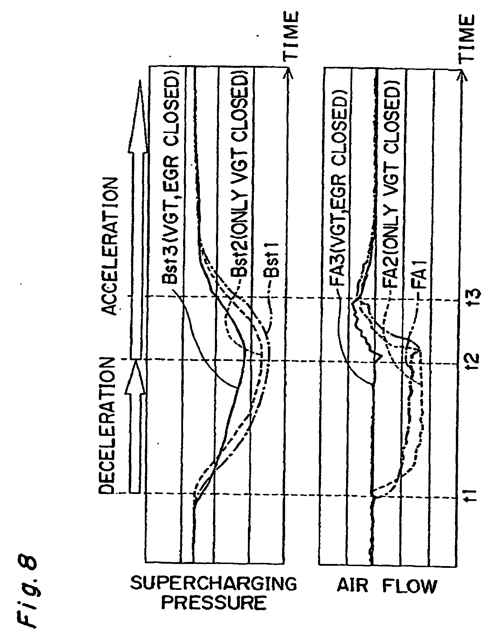

Hereinafter, the above-mentioned effects will be concretely described with reference to Fig. 8. Fig. 8 shows changes of the supercharging pressure and the intake air quantity in the case that after the engine is decelerated at the time point of t1, the engine is accelerated again at the time point t2, which is later than the time point t1 for the predetermined period. In the figure, there are shown changes of the supercharging pressure Bst1 and the intake air quantity FA1 drawn by dashed lines as the first example for reference. Hereupon, each of the VGT 5 and the EGR valve 12 is controlled by the feedback control during the deceleration process, too. According to the first example for reference, it may be understood that increase of each of the supercharging pressure and the intake air quantity is delayed when the engine is accelerated again. Because, each of the supercharging pressure Bst1 and the intake air quantity FAl is highly lowered during the deceleration process. Meanwhile, in the figure, there are also shown changes of the supercharging pressure Bst2 and the intake air quantity FA2 drawn by broken lines as the second example for reference, in which the variable wings 8 of the VGT 5 are closed during the deceleration process. According to the second example for reference, it may be understood that fall of the supercharging pressure during the deceleration process is restrained to some degree in comparison with that of the first example for reference. In consequence, increase of each of the supercharging pressure and the intake air quantity is hastened when the engine is accelerated again.

In the figure, there are shown changes of the supercharging pressure Bst3 and the intake air quantity FA3 drawn by solid lines as the embodiment, in which the variable wings 8 of the VGT 5 and the EGR valve 12 are closed during the deceleration process. According to the above-mentioned control method, the supercharging efficiency may be raised by closing the variable wings 8 when the engine is decelerated. Further, the operation to restrain decrease of the supercharging pressure and the intake air quantity during the deceleration process is raised in comparison with the second example for reference, by closing the EGR valve 12 so as to feed the exhaust gas to the turbine 7 through the variable wings 8 without releasing the exhaust gas to the EGR passage 11. Therefore, increase of the supercharging pressure is hastened when the engine is accelerated again, thereby increase of the intake air is highly promoted in the early stage of the acceleration process (period between t2 and t3).

Thus, in the low or middle rotation region, as compared with the high rotation region, the quantity of the exhaust gas is smaller, and further the energy of the exhaust gas decreases due to decrease of the fuel injection quantity during the deceleration process even if the fuel is fed. Therefore, if the variable wings 8 of the VGT 5 and the EGR valve 12 are closed together, the exhaust pressure is prevented from rising to excess so that the supercharging efficiency is effectively raised.

Meanwhile, if the actual supercharging pressure is higher than the target supercharging pressure by the time point that the predetermined time passes from the time point of deceleration judgement, the variable wings 8 of the VGT 5 are held in the closed states so that fall of the supercharging pressure is restrained. Then, if the target supercharging pressure is raised to become up to the actual supercharging pressure when the engine is accelerated again, the feedback control of the VGT 5 is re-started, thereby the actual supercharging pressure is controlled so as to follow the target supercharging pressure during the acceleration process.

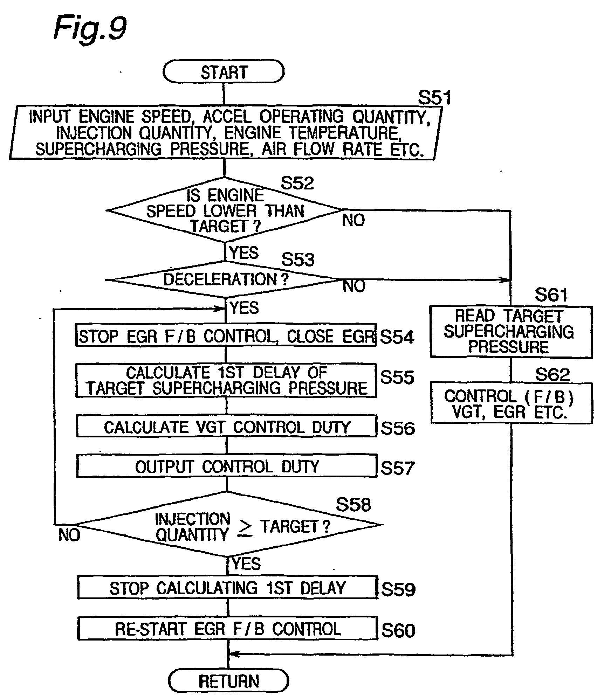

A further example of the control by means of the combined controller 40 will be described with reference to the flowchart shown in Fig. 9. In the flowchart, the operation to input various signals in Step S51, the operation to judge whether the engine rotating speed is lower than the predetermined rotating speed or not in Step S52 and the operation to judge whether the engine is decelerated or not in Step S53 when the engine rotating speed is lower than the predetermined rotating speed, are as same as those in Steps S31 to S33 shown in Fig. 7.

If it is judged that the engine is working in the deceleration state within the region in which the engine rotating speed Ne is lower than the predetermined rotating speed, the feedback control is stopped and the EGR valve 12 is closed in Step S54 even if the air flow feedback control of the EGR valve 12 has been performed till the time point. Further, the control of the VGT 5 is performed in the same manner as described in Steps S55 to S57. That is, the first order lag of the target supercharging pressure is calculated in Step S55. Further, in order to perform the feedback control so as to diminish the deviation between the calculated values of the first order lag of the target supercharging pressure and the actual supercharging pressure, the control duty of the VGT control is calculated in accordance with the deviation in Step S56. Then, the control duty is output to the solenoid valve 26B for actuating the VGT 5 in Step S57.

Following that, in Step S58, it is judged whether the fuel injection quantity is larger than or equal to the predetermined value or not. If the judgement in Step S58 is NO, namely if the engine is working in the continuously decelerated state in which the fuel injection quantity is smaller than the predetermined value, the operation is returned to Step S 54. Then the operations of Steps S54 to S58 are repeated.

If the judgement in Step S58 is YES, the calculation of the first order lag is stopped in Step S59. Then, the control of the VGT 5 is returned to the general feedback control, while the feedback control of the EGR 12 is re-started in Step S60.

Hereupon, when it is judged that the engine rotating speed is larger than or equal to the predetermined rotating speed in Step S52, or when it is judged that the engine is working in the state other than the deceleration region in Step S53, the VGT 5 and the EGR valve 12 are controlled in accordance with the working condition. For example, if the engine is working in the partial load region B (see Fig. 4), the feedback control of each of the EGR valve 12 and the VGT 5 is performed. In this case, the read target supercharging pressure is used in the present state without calculating the first order lag in the supercharging pressure feedback control of the VGT 5 as described in Steps S61 and S62.

According to the control process of the present embodiment, when the engine is decelerated in the state, in 5 which the VGT 5 and the EGR valve 12 are controlled by the feedback control respectively, in the partial load region within the low or middle rotation region, the EGR valve 12 is closed, and further the feedback control of the VGT 5 is performed in accordance with the deviation between the calculated values of the first order lag of the target supercharging pressure and the actual supercharging pressure. Thus, in the above-mentioned control, the openness of the variable wings 8 of the VGT 5 becomes smaller in comparison with the feedback control performed in accordance with the deviation between the target supercharging pressure and the actual supercharging pressure.

That is, because the fuel injection quantity is reduced during the deceleration process so that the energy of the exhaust gas is lowered, the actual supercharging pressure is lowered. Further, the target supercharging pressure rapidly falls in accordance with decrease of the target torque. Hereupon, because the fall of the target supercharging pressure is larger than the fall of the actual supercharging pressure, the openness of the variable wings 8 of the VGT 5 becomes larger if the feedback control is performed in accordance with the deviation between the target supercharging pressure and the actual supercharging pressure. However, because the calculated values of the first order lag of the target supercharging pressure changes slowly in the present control process, the openness of the variable wings 8 of the VGT 5 becomes smaller if the feedback control is performed in accordance with the deviation between the above mentioned values and the actual supercharging pressure. Therefore, in the control process according to the present embodiment also, the variable wings 8 of the VGT 5 are actuated to move toward the closed state during the deceleration process. Further, by closing the EGR valve 12, the fall of the supercharging pressure during the deceleration process is sufficiently restrained so that the supercharging pressure and the intake air quantity are promoted to increase when the engine is accelerated again.

Hereupon, the VGT control during the deceleration process, in which the supercharging pressure feedback control is performed while calculating the first order lag of the target supercharging pressure as described above, may be more effective if it is performed in the fuel cut deceleration state. That is, because the control during the fuel cut process, in which the combustion gas is not discharged, does not have direct relation with the emission efficiency, the emission efficiency may be out of the question even if the supercharging pressure feedback control is performed while making the target supercharging pressure even. Further, by making the target supercharging pressure even to restrain the fall of the supercharging pressure as described above, the stability and re-acceleration performance of the engine may be raised when the engine is returned to the fuel fed state.

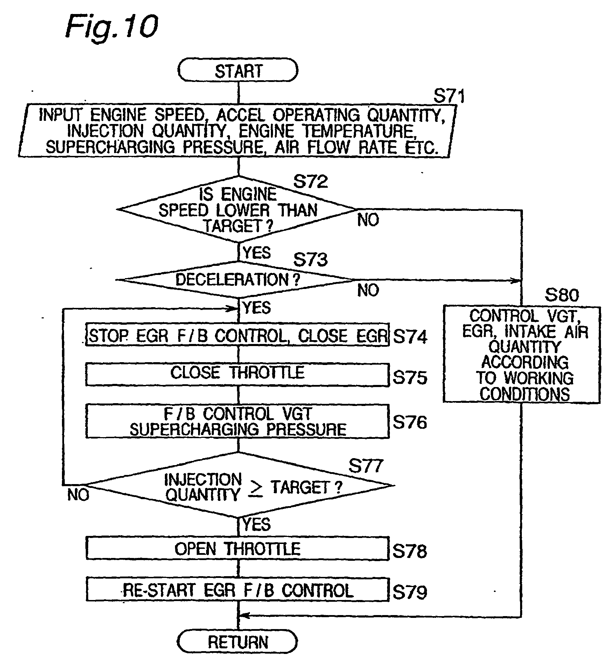

A much further example of the control by means of the combined controller 40 will be described with reference to the flowchart shown in Fig. 10. In the flowchart, the operation to input various signals in Step S71, the operation to judge whether the engine rotating speed is lower than the predetermined rotating speed or not in Step S72 and the operation to judge whether the engine is decelerated or not in Step S73 when the engine rotating speed is lower than the predetermined rotating speed, are as same as those in Steps S31 to S33 shown in Fig. 7.

If it is judged that the engine is working in the deceleration state within the region in which the engine rotating speed Ne is lower than the predetermined rotating speed, the feedback control is stopped and the EGR valve 12 is closed in Step S74 even if the air flow feedback control of the EGR valve 12 has been performed till the present time point. Further, the throttle valve 23 is closed in Step S75. Meanwhile, the supercharging pressure feedback control of the VGT 5 is continued in Step S76.

Following that, in Step S77, it is judged whether the fuel injection quantity is larger than or equal to the predetermined value or not. If the judgement in Step S77 is NO, namely if the engine is working in the continuously decelerated state in which the fuel injection quantity is smaller than the predetermined value, the operation is returned to Step S74. Then, the operations of Steps S74 to S76 are repeated.

If the judgement in Step S77 is YES, the throttle valve 23 is opened in Step S 78, and then the feedback control of the EGR valve 12 is re-started in Step S79.

Hereupon, when it is judged that the engine rotating speed is larger than or equal to the predetermined rotating speed in Step S72, or when it is judged that the engine is working in the state other than the deceleration region in Step S73, the VGT 5 and the EGR valve 12 are controlled in accordance with the working condition. For example, if the engine is working in the partial load region B (see Fig. 4), the feedback control of each of the EGR valve 12 and the VGT 5 is performed.

According to the control process of the present embodiment, when the engine is decelerated in the state, in which the VGT 5 and the EGR valve 12 are controlled by the feedback control respectively, in the partial load region within the low or middle rotation region, the air flow feedback control is stopped so that the EGR valve 12 and the throttle valve 23 are closed. Thus, in the supercharging pressure feedback control of the VGT 5 described above, the openness of the variable wings 8 of the VGT 5 becomes smaller in comparison with the supercharging pressure feedback control of the VGT 5 performed in the state that the throttle valve 23 is opened.

That is, as described above, when the engine is decelerated, the target supercharging pressure and the actual supercharging pressure fall together. Hereupon, if the supercharging pressure feedback control is performed in the state that the throttle valve 23 is opened, the openness of the variable wings 8 of the VGT 5 becomes larger because the target supercharging pressure becomes lower than the actual supercharging pressure. However, in the control process of the present embodiment, the pressure in the intake passage 2 at the downstream position relative to the throttle valve 23 is rapidly lowered in the state that the throttle valve 23 and the EGR valve 12 are closed together. In consequence, in the control process of the present embodiment, the openness of the variable wings 8 of the VGT 5 can be made smaller, by using the air pressure at the downstream position relative to the throttle valve 23 in the above-mentioned state as the actual supercharging pressure and performing the supercharging pressure feedback control on the basis of the air pressure and the target supercharging pressure.

Therefore, in the control process according to the present embodiment also, the variable wings 8 of the VGT 5 are actuated to move toward the closed state during the deceleration process. Further, by closing the EGR valve 12, the fall of the supercharging pressure during the deceleration process is sufficiently restrained so that the supercharging pressure and the intake air quantity are promoted to increase when the engine is accelerated again.

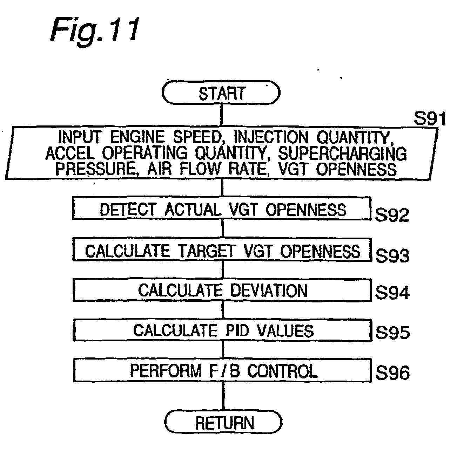

Because the constructions of the controllers or the like in the apparatus according to the present invention need not restricted to those of the embodiments described above, various modifications or variations may be achieved. Hereinafter, some modifications or variations will be described.
(1) In the embodiments shown in Fig. 3 and so on, the supercharging pressure feedback control for controlling the openness of the variable wings 8 of the VGT 5, which is control by the VGT controller 42 in the partial load region B, is performed in accordance with the deviation between the target supercharging pressure and the actual supercharging pressure. Instead of those, the feedback control for controlling the openness of the VGT 5 shown in Fig. 11
   That is, in the present example, the apparatus is provided with a VGT openness sensor (detector for detecting the openness of the variable wings) which outputs signals corresponding to the openness of the variable wings 8 of the VGT 5. Thus, according to the control process, in Step S91, various signals including the signals from the VGT openness sensor are input to the controller. In Step S92, the actual VGT openness (openness of the variable wings) is detected in accordance with the signals from the VGT openness sensor. In Step S93, the target VGT openness corresponding to the working condition is calculated. Then, in Step S94, the deviation between the actual VGT openness and the target VGT openness is calculated. Further, in Step S95, the PID values (proportional control value, integral control value and differential control value) are calculated in accordance with the deviation. Moreover, in Step S96, the feedback control is performed by means of PID control process. In this example, the target VGT openness is set in accordance with the working condition in the partial load region B. Then, the feedback control is performed in such a manner that the actual VGT openness follows the target VGT openness. Thus, if the working condition of the engine enters the fuel cut region from the state controlled as described above, the supercharging efficiency is raised by closing wholly or opening to a little degree the variable wings 8 of the VGT 5.
(2) In the example shown in Fig. 5, the EGR valve 12 is partially opened when the engine is working in the low or middle rotation region within the fuel cut deceleration region. However, when the engine is working in the low rotation region within the fuel cut region, in which the gas flow rate in the exhaust passage is particularly smaller, the EGR valve 12 may be closed wholly.
(3) In the example shown in Fig. 5, the variable wings 8 of the VGT 5 are closed wholly when the engine is working in the fuel cut deceleration region. However, when the engine is working in the high rotation region within the fuel cut region, in which the gas flow rate in the exhaust passage is larger, the variable wings 8 may be opened to a predetermined little degree of openness in order to adjust the exhaust pressure adequately.
(4) In the example shown in Fig. 5, the throttle valve 23 is opened wholly when the engine is working in the fuel cut deceleration region. However, even if the throttle valve 23 is actuated to move toward the closed state to some degree in the gradually decelerating state in which the engine is decelerated gradually, there is not caused a disadvantage such as deterioration of the re-acceleration performance, occurrence of surging or the like. Hereupon, if the throttle valve is actuated to move toward the closed state to some degree, the gas may be advantageously introduced from the EGR passage 11 to the intake passage 2.
(5) In the example shown in Fig. 6, both of the variable wings 8 of the VGT 5 and the EGR valve 12 are controlled so as to raise the supercharging efficiency in the fuel cut deceleration region. However, it is possible that only the EGR valve 12 is controlled so as to raise the supercharging efficiency while holding the variable wings 8 of the VGT 5 in a constant openness, for example closing it wholly. In this case, the supercharging efficiency may be raised by decreasing the openness of the EGR valve 12 in correspondence with the decrease of the engine rotating speed in the fuel cut deceleration region.
(6) In each of the examples shown in Figs. 7, 9 and 10, the variable wings 8 of the VGT 5 is actuated to move toward the closed state and the EGR valve 12 is closed, when the engine is decelerated in the region in which the engine rotating speed is lower than or equal to the predetermined rotating speed. However, the above-mentioned control may be performed only when the engine is decelerated in the fuel fed region. Thus, when the engine is decelerated in the fuel cut region, the variable wings 8 of the VGT 5 may be actuated to move toward the closed state, while opening partially or closing wholly the EGR valve 12.
   If so, when the engine is decelerated in the fuel cut region, the fall of the supercharging pressure may be restrained by closing the variable wings of the VGT 5. Further, fresh air, which does not contain combustion gas, is refluxed from the exhaust passage to the air intake system through the EGR passage 11 by opening the EGR valve 12, as described above. In consequence, the density of the fresh air is raised due to cooling operation of the reflux so that the acceleration performance may be raised due to the combined operations thereof. Hereupon, when the engine is decelerated in the fuel fed region, the above-mentioned effect to raise the density of the intake air, which is achieved by the cooling operation in the fuel cut region when the engine is accelerated again, cannot be achieved, even if the EGR valve 12 is opened. However, the operation to restrain the fall of the supercharging pressure may be raised by closing the EGR valve 12 so as to feed wholly the exhaust gas to the VGT 5 without releasing it to the EGR passage.
(7) In addition to the control in the decelerating state within the low or middle rotation region, according to each of the examples shown in Figs. 7, 9 and 10, there may be performed such control that the variable wings 8 of the VGT 5 is actuated to move toward the closed states while opening the EGR valve 12, when the engine is decelerated in the high rotation region.

As described above, the engine having the turbo supercharger according to the present invention is provided with variable wings for changing the exhaust gas flow area to the turbine, the exhaust gas reflux passage and the exhaust gas reflux valve. Thus, in the engine, when the working condition enters the deceleration region such as the fuel cut deceleration region, the supercharging efficiency is raised by controlling the variable wings and the exhaust gas reflux valve. Therefore, the rapid fall of the supercharging pressure is restrained during the deceleration process, thereby the increase of the supercharging pressure is hastened when the engine is accelerated again so that the acceleration performance may be improved.

Particularly, if the variable wings are closed and the exhaust gas reflux valve is opened at least partially when the engine is working in the deceleration region within the high rotation region, the exhaust pressure is prevented from rising to excess when the variable wings are actuated to move toward the closed state. Because, the excess gas in the exhaust passage is released to the exhaust gas reflux passage. Therefore, the control for improving the re-acceleration performance may be effectively performed.

Further, if the throttle valve is disposed in the intake passage at the upstream position relative to the connecting point to the exhaust gas reflux passage, the supercharging efficiency is raised so that the re-acceleration performance is effectively improved by controlling the variable wings and opening the throttle valve in the deceleration process.

Moreover, when the engine is decelerated in the low or middle rotation region, the exhaust gas is fed to the turbine of the turbo supercharger through the variable wings without releasing it to the exhaust gas reflux passage, by actuating the variable wings to the more closed state and closing the exhaust gas reflux valve. Thus, the fall of the supercharging pressure during the deceleration process is effectively restrained by closing the variable wings so as to raise the supercharging efficiency.

Although the present invention has been described in relation to particular embodiments thereof, many other variations and modifications will become apparent to those skilled in the art. It is preferred, therefore, that the present invention be limited not by the specific disclosure herein, but only by the appended claims.

## Claims

1. A control apparatus of an engine (1) having a turbo supercharger (5) which includes a variable wing (8) disposed in an exhaust passage (3), for changing an exhaust gas flow area to a turbine (7) of the turbo supercharger (5), and an exhaust gas reflux passage (11) connecting a portion of the exhaust passage (3) to an intake passage (2), the portion being located at an upstream position relative to the variable wing (8), and the exhaust gas reflux passage (11) being provided with an exhaust gas reflux valve (12) for adjusting a reflux flow of an exhaust gas therein, the control apparatus comprises:
a working condition detector for detecting a working condition of the engine (1); and
a controller (30) for controlling the variable wing (8) and exhaust gas reflux valve (12) in accordance with the working condition detected by the working condition detector, **characterized in that**
the controller (30) makes the variable wing (8) move toward a more closed state when the engine (1) is decelerated in a loaded working region in which the variable wing (8) is opened at least partially, and makes the exhaust gas reflux valve (12) close in a low or middle engine rotation region in accordance with the working condition in time of said deceleration of the engine (1), while the controller (30) makes the variable wing (8) move toward a closed state while opening the exhaust gas reflux valve (12) when the engine (1) is decelerated in a high engine rotation region.

2. The control apparatus according to claim 1, **characterized in that** when the engine (1) is decelerated in a low rotation region in which a rotating speed of the engine (1) is lower than or equal to a predetermined rotating speed, the controller (30) makes the variable wing (8) move toward the more closed state, and makes the exhaust gas reflux valve (12) move toward a more closed state so as to make a supercharging efficiency of the turbo supercharger (5) become larger.

3. The control apparatus according to claim 1, **characterized in that** the engine (1) includes an intake pressure sensor (25) for detecting a pressure of an intake air, and
the controller (30) performs a feedback control of the variable wing (8) in such a manner that an actual supercharging pressure detected by the intake pressure sensor (25) follows a target supercharging pressure, which is set in accordance with a required load, in a loaded working state before the engine (1) is decelerated, stops the feedback control of the variable wing (8) when the engine (1) is decelerated in said state that the feedback control is being performed, and re-starts the feedback control of the variable wing (8) when the engine (1) is accelerated again in said state that the feedback control is being stopped, in accordance with an increase of the target supercharging pressure after said acceleration is started.

4. The control apparatus according to claim 3, **characterized in that** the controller (30) re-starts the feedback control of the variable wing (8) at a timing that the actual supercharging pressure becomes lower than the target supercharging pressure when the engine (1) is accelerated again in said state that the feedback control is being stopped.

5. The control apparatus according to claim 1, **characterized in that** the controller (30) performs a feedback control of the exhaust gas reflux valve (12) in such a manner that an air fuel ratio follows a target air fuel ratio in a loaded working state before the engine (1) is decelerated, stops the feedback control of the exhaust gas reflux valve (12) when the engine (1) is decelerated in said state that the feedback control is being performed, and re-starts the feedback control of the exhaust gas reflux valve (12) when the engine (1) is accelerated again in said state that the feedback control is being stopped, in accordance with an increase of a fuel injection quantity.

6. The control apparatus according to claim 3, **characterized in that** the controller (30) re-starts the feedback control of the variable wing (8) when the engine (1) is accelerated again within a predetermined time from a timing that the engine (1) is judged to be decelerated.

7. The control apparatus according to claim 1, **characterized in that** the engine (1) includes an intake pressure sensor (25) for detecting a pressure of an intake air, and
the controller (30) performs a feedback control of the variable wing (8) in such a manner that an actual supercharging pressure detected by the intake pressure sensor (25) follows a target supercharging pressure which is set in accordance with a required load, in a loaded working region, and also performs the feedback control of the variable wing (8) when the engine (1) is decelerated in said loaded working region, the feedback control of the variable wing (8) performed when the engine (1) is decelerated, being performed in such a manner that a change of the target supercharging pressure has a first order lag to a change of the requested load.

8. The control apparatus according to claim 7, **characterized in that** the controller (30) performs the feedback control of the variable wing (8), in which the change of the target supercharging pressure has the first order lag to the change of the requested load, when the engine (1) is decelerated in a fuel cut state.

9. The control apparatus according to claim 1, **characterized in that** the engine (1) includes a throttle valve (23) disposed at a downstream position relative to a compressor (6) of the turbo supercharger (5) in an intake passage (2) and an intake pressure sensor (25) for detecting a pressure of an intake air at a downstream position relative to the throttle valve (23), and
the controller (30) performs a feedback control of the variable wing (8) in such a manner that an actual supercharging pressure detected by the intake pressure sensor (25) follows a target supercharging pressure which is set in accordance with a required load, in a loaded working region, also performs the feedback control of the variable wing (8) when the engine (1) is decelerated in said loaded working region, and makes the throttle valve (23) move toward a more closed state in said state that the engine (1) is decelerated.

10. The control apparatus according to claim 1, **characterized in that** the controller (30) opens the variable wing (8) when the engine (1) is working in a region of high rotating speed and high load, while the controller (30) closes the variable wing (8) and opens the exhaust gas reflux valve (12) at least partially when the engine (1) is working in a region of high rotating speed and deceleration.

11. The control apparatus according to claim 10, **characterized in that** the controller (30) wholly opens the exhaust gas reflux valve (12), when the engine (1) is working in a region of high rotating speed and deceleration with fuel cut, and temperature of the engine (1) is higher than a predetermined value.

12. The control apparatus according to claim 10, **characterized in that** the exhaust gas reflux passage (11) is provided with a reflux gas cooler (29) for cooling a reflux gas which passes through the passage (11).

13. The control apparatus according to claim 10, **characterized in that** the engine (1) includes a throttle valve (23) disposed at a downstream position relative to a compressor (6) of the turbo supercharger (5) in an intake passage (2), the exhaust gas reflux passage (11) being connected to the intake passage (2) at a downstream position relative to the throttle valve (23), and
the controller (30) performs a control of the throttle valve (23) in such a manner that the throttle valve (23) opens in a working region of high rotating speed and deceleration with fuel cut, in addition to said control of the variable wing (8) and exhaust gas reflux valve (12).

14. The control apparatus according to claim 10, **characterized in that** the controller (30) controls the exhaust gas reflux valve (12) in such a manner that the lower the rotating speed of the engine (1) is, the smaller an openness of the exhaust gas reflux valve (12) is, in a region of deceleration with fuel cut from a low rotating state to a high rotating state.

15. The control apparatus according to claim 10, **characterized in that** the controller (30) makes the exhaust gas reflux valve (12) close when the engine (1) is accelerated again.

## Patentansprüche

1. Steuervorrichtung für einen Motor (1) mit einem Turbolader (5), der eine in einem Abgasdurchgang (3) angeordnete verstellbare Leitschaufel (8) zur Änderung eines Abgasdurchflussquerschnitts zu einer Turbine (7) des Turboladers (5) und einen Abgasrückflussdurchgang (11) enthält, der einen Teil des Abgasdurchgangs (3) mit einem Einlassdurchgang (2) verbindet, wobei der Teil an einer stromaufwärtigen Stelle bezüglich der verstellbaren Leitschaufel (8) angeordnet ist und der Abgasrückflussdurchgang (11) mit einem Abgasrückflussventil (12) zur Einstellung eines Rückflusses eines Abgases darin versehen ist, wobei die Steuervorrichtung
einen Betriebszustanddetektor zum Erfassen eines Betriebszustands des Motors (1) und
eine Steuerung (30) zum Steuern der verstellbaren Leitschaufel (8) und des Abgasrückflussventils (12) gemäß dem durch den Betriebszustanddetektor erfassten Betriebszustand umfasst,
**dadurch gekennzeichnet, dass**
die Steuerung (30) eine Bewegung der verstellbaren Leitschaufel (8) in einen geschlosseneren Zustand bewirkt, wenn der Motor (1) in einem belasteten Arbeitsbereich verzögert wird, in dem die verstellbare Leitschaufel (8) zumindest teilweise geöffnet ist, und ein Schließen des Abgasrückflussventils (12) in einem geringen oder mittleren Motorumdrehungsbereich gemäß dem Betriebszustand bei der Verzögerung des Motors (1) bewirkt, während die Steuerung (30) eine Bewegung der verstellbaren Leitschaufel (8) in einen geschlossenen Zustand bewirkt, während sie das Abgasrückflussventil (12) öffnet, wenn der Motor (1) in einem hohen Motorumdrehungsbereich verzögert wird.

2. Steuervorrichtung nach Anspruch 1, **dadurch gekennzeichnet, dass** die Steuerung (30) bei Verzögerung des Motors (1) in einem geringen Umdrehungsbereich, in dem eine Drehzahl des Motors (1) kleiner gleich einer vorbestimmten Drehzahl ist, eine Bewegung der verstellbaren Leitschaufel (8) in einen geschlosseneren Zustand und eine Bewegung des Abgasrückflussventils (12) in einen geschlosseneren Zustand bewirkt, um eine Aufladeleistung des Turboladers (5) zu erhöhen.

3. Steuervorrichtung nach Anspruch 1, **dadurch gekennzeichnet, dass** der Motor (1) einen Einlassdrucksensor (25) zur Erfassung eines Einlassluftdrucks enthält und
die Steuerung (30) eine Rückkopplungsregelung der verstellbaren Leitschaufel (8) derart durchführt, dass ein durch den Einlassdrucksensor (25) erfasster Istaufladedruck einem gemäß einer erforderlichen Last eingestellten Sollaufladedruck in einem belasteten Betriebszustand folgt, bevor der Motor (1) verzögert wird, die Rückkopplungsregelung der verstellbaren Leitschaufel (8) in dem Zustand, in dem die Rückkopplungsregelung durchgeführt wird, anhält, wenn der Motor (1) verzögert wird, und die Rückkopplungsregelung der verstellbaren Leitschaufel (8) in dem Zustand, in dem die Rückkopplungsregelung angehalten ist, gemäß einer Erhöhung des Sollaufladedrucks nach Beginn der Beschleunigung wieder startet, wenn der Motor (1) wieder beschleunigt wird.

4. Steuervorrichtung nach Anspruch 3, **dadurch gekennzeichnet, dass** die Steuerung (30) die Rückkopplungsregelung der verstellbaren Leitschaufel (8) zu einem Zeitpunkt wieder startet, zu dem der Istaufladedruck niedriger wird als der Sollaufladedruck, wenn der Motor (1) in dem Zustand, in dem die Rückkopplungsregelung angehalten ist, wieder beschleunigt wird.

5. Steuervorrichtung nach Anspruch 1, **dadurch gekennzeichnet, dass** die Steuerung (30) eine Rückkopplungsregelung des Abgasrückflussventils (12) so durchführt, dass ein Luft-Kraftstoff-Verhältnis einem Soll-Luft-Kraftstoff-Verhältnis in einem belasteten Betriebszustand vor Verzögerung des Motors (1) folgt, die Rückkopplungsregelung des Abgasrückflussventils (12) anhält, wenn der Motor (1) in dem Zustand, in dem die Rückkopplungsregelung durchgeführt wird, verzögert wird, und die Rückkopplungsregelung des Abgasrückflussventils (12) gemäß einer Erhöhung einer Kraftstoffeinspritzmenge wieder startet, wenn der Motor (1) in dem Zustand, in dem die Rückkopplungsregelung angehalten ist, wieder beschleunigt wird.

6. Steuervorrichtung nach Anspruch 3, **dadurch gekennzeichnet, dass** die Steuerung (30) die Rückkopplungsregelung der verstellbaren Leitschaufel (8) wieder startet, wenn der Motor (1) innerhalb einer vorbestimmten Zeitspanne von einem Zeitpunkt an, zu dem der Motor (1) als verzögert bewertet wird, wieder beschleunigt wird.

7. Steuervorrichtung nach Anspruch 1, **dadurch gekennzeichnet, dass** der Motor (1) einen Einlassdrucksensor (25) zur Erfassung eines Einlassluftdrucks enthält und
die Steuerung (30) eine Rückkopplungsregelung der verstellbaren Leitschaufel (8) derart durchführt, dass ein durch den Einlassdrucksensor (25) erfasster Istaufladedruck einem gemäß einer erforderlichen Last eingestellten Sollaufladedruck in einem belasteten Betriebszustand folgt,
und des Weiteren die Rückkopplungsregelung der verstellbaren Leitschaufel (8) bei Verzögerung des Motors (1) in dem belasteten Arbeitsbereich durchführt, wobei die bei Verzögerung des Motors (1) durchgeführte Rückkopplungsregelung der verstellbaren Leitschaufel (8) so durchgeführt wird, dass eine Änderung des Sollaufladedrucks eine Verzögerung erster Ordnung für eine Änderung der erforderlichen Last aufweist.

8. Steuervorrichtung nach Anspruch 7, **dadurch gekennzeichnet, dass** die Steuerung (30) die Rückkopplungsregelung der verstellbaren Leitschaufel (8) durchführt, wobei die Änderung des Istaufladedrucks die Verzögerung erster Ordnung für die Änderung der erforderlichen Last aufweist, wenn der Motor (1) in einem Kraftstoffabsperrzustand verzögert wird.

9. Steuervorrichtung nach Anspruch 1, **dadurch gekennzeichnet, dass** der Motor (1) ein Drosselventil (23), das an einer stromabwärtigen Stelle bezüglich eines Verdichters (6) des Turboladers (5) in einem Einlassdurchgang (2) angeordnet ist, und einen Einlassdrucksensor (25) zur Erfassung eines Einlassluftdrucks an einer stromabwärtigen Stelle bezüglich des Drosselventils (23) enthält, und
die Steuerung (30) eine Rückkopplungsregelung der verstellbaren Leitschaufel (8) derart durchführt, dass ein durch den Einlassdrucksensor (25) erfasster Istaufladedruck einem gemäß einer erforderlichen Last eingestellten Sollaufladedruck in einem belasteten Arbeitsbereich folgt, und des Weiteren die Rückkopplungsregelung der verstellbaren Leitschaufel (8) durchführt, wenn der Motor (1) in dem belasteten Arbeitsbereich verzögert wird, und in dem Zustand, in dem der Motor (1) verzögert wird, eine Bewegung des Drosselventils (23) in einen geschlosseneren Zustand bewirkt.

10. Steuervorrichtung nach Anspruch 1, **dadurch gekennzeichnet, dass** die Steuerung (30) die verstellbare Leitschaufel (8) öffnet, wenn der Motor (1) in einem hohen Drehzahl- und Lastbereich betrieben wird, während die Steuerung (30) die verstellbare Leitschaufel (8) schließt und das Abgasrückflussventil (12) zumindest teilweise öffnet, wenn der Motor (1) in einem hohen Drehzahl- und Verzögerungsbereich betrieben wird.

11. Steuervorrichtung nach Anspruch 10, **dadurch gekennzeichnet, dass** die Steuerung (30) das Abgasrückflussventil (12) vollständig öffnet, wenn der Motor (1) in einem hohen Drehzahl- und Verzögerungsbereich mit Kraftstoffabsperrung betrieben wird und die Temperatur des Motors (1) höher ist als ein vorbestimmter Wert.

12. Steuervorrichtung nach Anspruch 10, **dadurch gekennzeichnet, dass** der Abgasrückflussdurchgang (11) mit einem Rückflussgaskühler (29) zum Kühlen eines den Durchgang (11) durchströmenden Rückflussgases versehen ist.

13. Steuervorrichtung nach Anspruch 10, **dadurch gekennzeichnet, dass** der Motor (1) ein Drosselventil (23) enthält, das an einer stromabwärtigen Stelle bezüglich eines Verdichters (6) des Turboladers (5) in einem Einlassdurchgang (2) angeordnet ist, wobei der Abgasrückflussdurchgang (11) an einer stromabwärtigen Stelle bezüglich des Drosselventils (23) mit dem Einlassdurchgang (2) verbunden ist, und
die Steuerung (30) neben der Steuerung der verstellbaren Leitschaufel (8) und des Abgasrückflussventils (12) eine Steuerung des Drosselventils (23) derart durchführt, dass sich das Drosselventil (23) in einem hohen Drehzahl- und Verzögerungsarbeitsbereich mit Kraftstoffabsperrung öffnet.

14. Steuervorrichtung nach Anspruch 10, **dadurch gekennzeichnet, dass** die Steuerung (30) das Abgasrückflussventil (12) derart steuert, dass in einem Verzögerungsbereich mit Kraftstoffabsperrung von einen Zustand mit geringer Drehzahl zu einem Zustand mit hoher Drehzahl eine Öffnung des Abgasrückflussventils (12) um so geringer ist, je niedriger die Drehzahl des Motors (1) ist.

15. Steuervorrichtung nach Anspruch 10, **dadurch gekennzeichnet, dass** die Steuerung (30) ein Schließen des Abgasrückflussventils (12) bewirkt, wenn der Motor (1) wieder beschleunigt wird.

## Revendications

1. Dispositif de commande pour moteur à combustion interne (1) suralimenté doté d'un turbocompresseur (5) qui comprend un volet variable (8) disposé dans un passage d'échappement (3), pour changer la zone d'écoulement de gaz d'échappement vers une turbine (7) du turbocompresseur (5), et un passage de reflux de gaz d'échappement (11) raccordant une partie du passage d'échappement (3) à un passage d'admission (2), la partie étant située à une position en amont par rapport au volet variable (8), et le passage de reflux de gaz d'échappement (11) étant pourvu d'une soupape de reflux de gaz d'échappement (12) pour régler l'écoulement d'un reflux de gaz d'échappement à travers elle, le dispositif de commande comprend :
un détecteur de condition de fonctionnement pour détecter une condition de fonctionnement du moteur (1) ; et
un module de commande (30) pour commander le volet variable (8) et la soupape de reflux de gaz d'échappement (12) en accord avec la condition de fonctionnement détectée par le détecteur de condition de fonctionnement, **caractérisé en ce que** le module de commande (30) commande au volet variable (8) de se déplacer vers un état plus fermé quand le moteur (1) est décéléré dans une région de fonctionnement en charge dans laquelle le volet variable (8) est ouvert au moins partiellement, et commande à la soupape de reflux de gaz d'échappement (12) de se fermer dans une région de bas ou moyen régime moteur en accord avec la condition de fonctionnement au moment de ladite décélération du moteur (1), tandis que le module de commande (30) commande au volet variable (8) de se déplacer vers un état totalement fermé tout en commandant à la soupape de reflux de gaz d'échappement (12) de s'ouvrir quand le moteur (1) est décéléré d'une région de haut régime.

2. Dispositif de commande selon la revendication 1, **caractérisé en ce que**, quand le moteur (1) est décéléré d'une région de bas régime dans lequel la vitesse de rotation du moteur (1) est inférieure ou égale à une vitesse de rotation prédéterminée, le module de commande (30) commande au volet variable (8) de se déplacer vers l'état plus fermé, et commande à la soupape de reflux de gaz d'échappement (12) de se déplacer vers un état plus fermé de manière à accroître l'efficacité de suralimentation du turbocompresseur (5).

3. Dispositif de commande selon la revendication 1, **caractérisé en ce que** le moteur (1) comprend un capteur de pression d'admission (25) pour détecter une pression d'air d'admission, et
le module de commande (30) exécute un contrôle du signal de retour du volet variable (8) de telle manière qu'une pression de suralimentation réelle détectée par le capteur de pression d'admission (25) suit une pression de suralimentation cible, qui est établie en accord avec une charge requise, dans un état de fonctionnement en charge avant que le moteur (1) soit décéléré, interrompt le contrôle du signal de retour du volet variable (8) quand le moteur (1) est décéléré dans ledit état auquel le contrôle du signal de retour est exécuté, et relance le contrôle du signal de retour du volet variable (8) quand le moteur (1) est accéléré de nouveau dans ledit état auquel le contrôle du signal de retour est interrompu, en accord avec une augmentation de la pression de suralimentation cible après que ladite accélération a commencé.

4. Dispositif de commande selon la revendication 3, **caractérisé en ce que** le module de commande (30) relance le contrôle du signal de retour du volet variable (8) au moment où la pression de suralimentation réelle devient inférieure à la pression de suralimentation cible quand le moteur (1) est accéléré de nouveau dans ledit état auquel le contrôle du signal de retour est interrompu.

5. Dispositif de commande selon la revendication 1, **caractérisé en ce que** le module de commande (30) exécute un contrôle du signal de retour de la soupape de reflux de gaz d'échappement (12) de telle manière qu'un rapport de mélange air/carburant suit un rapport de mélange air/carburant cible dans un état de fonctionnement en charge avant que le moteur (1) soit décéléré, interrompt le contrôle du signal de retour de la soupape de reflux de gaz d'échappement (12) quand le moteur (1) est décéléré dans ledit état auquel le contrôle du signal de retour est exécuté, et relance le contrôle du signal de retour de la soupape de reflux de gaz d'échappement (12) quand le moteur (1) est accéléré de nouveau dans ledit état auquel le contrôle du signal de retour est interrompu, en accord avec une augmentation de la quantité d'injection de carburant.

6. Dispositif de commande selon la revendication 3, **caractérisé en ce que** le module de commande (30) relance le contrôle du signal de retour du volet variable (8) quand le moteur (1) est accéléré de nouveau dans un temps prédéterminé à partir du moment auquel le moteur (1) est jugé avoir été décéléré.

7. Dispositif de commande selon la revendication 1, **caractérisé en ce que** le moteur (1) comprend un capteur de pression d'admission (25) pour détecter une pression d'air d'admission, et
le module de commande (30) exécute un contrôle du signal de retour du volet variable (8) de telle manière qu'une pression de suralimentation réelle détectée par le capteur de pression d'admission (25) suit une pression de suralimentation cible, qui est établie en accord avec une charge requise, dans une région de fonctionnement en charge, et qui exécute également le contrôle du signal de retour du volet variable (8) quand le moteur (1) est décéléré dans ladite région de fonctionnement en charge, le contrôle du signal de retour du volet variable (8) exécuté quand le moteur (1) est décéléré étant exécuté de telle manière qu'un changement de la pression de suralimentation cible comprend un premier retard de commande en réponse à un changement de la charge requise.

8. Dispositif de commande selon la revendication 7, **caractérisé en ce que** le module de commande (30) exécute le contrôle du signal de retour du volet variable (8), dans lequel le changement de la pression de suralimentation cible comprend le premier retard de commande en réponse à un changement de la charge requise, quand le moteur (1) est décéléré dans un état de coupure de l'alimentation de carburant.

9. Dispositif de commande selon la revendication 1, **caractérisé en ce que** le moteur (1) comprend un papillon de gaz (23) disposé à une position en aval par rapport à un compresseur (6) du turbocompresseur (5) dans un passage d'admission (2) et un capteur de pression d'admission (25) pour détecter une pression d'air d'admission à une position en aval par rapport au papillon de gaz (23), et
le module de commande (30) exécute un contrôle du signal de retour du volet variable (8) de telle manière qu'une pression de suralimentation réelle détectée par le capteur de pression d'admission (25) suit une pression de suralimentation cible, qui est établie en accord avec une charge requise, dans une région de fonctionnement en charge, et qui exécute également le contrôle du signal de retour du volet variable (8) quand le moteur (1) est décéléré dans ladite région de fonctionnement en charge, et commande au papillon de gaz (23) de se déplacer vers un état plus fermé dans ladite condition à laquelle le moteur (1) est décéléré.

10. Dispositif de commande selon la revendication 1, **caractérisé en ce que** le module de commande (30) ouvre le volet variable (8) quand le moteur (1) fonctionne dans une région de haut régime et de forte charge, tandis que le module de commande (30) ferme le volet variable (8) et ouvre la soupape de reflux de gaz d'échappement (12) du moins partiellement quand le moteur (1) fonctionne dans une région de haut régime et de décélération.

11. Dispositif de commande selon la revendication 10, **caractérisé en ce que** le module de commande (30) ouvre entièrement la soupape de reflux de gaz d'échappement (12) quand le moteur (1) fonctionne dans une région de haut régime et de décélération avec coupure de l'alimentation de carburant, et que la température du moteur (1) est supérieure à une valeur prédéterminée.

12. Dispositif de commande selon la revendication 10, **caractérisé en ce que** le passage de reflux de gaz d'échappement (11) est pourvu d'un refroidisseur de gaz d'échappement (29) destiné à refroidir le gaz d'échappement qui traverse le passage (11).

13. Dispositif de commande selon la revendication 10, **caractérisé en ce que** le moteur (1) comprend un papillon de gaz (23) disposé à une position en aval par rapport à un compresseur (6) du turbocompresseur (5) dans un passage d'admission (2), le passage de reflux de gaz d'échappement (11) étant raccordé au passage d'admission (2) à une position en aval par rapport au papillon de gaz (23), et
le module de commande (30) exécute un contrôle du papillon de gaz (23) de telle manière que le papillon de gaz (23) s'ouvre dans une région de fonctionnement à haut régime et de décélération avec coupure de l'alimentation de carburant, en plus dudit contrôle du volet variable (8) et de la soupape de reflux de gaz d'échappement (12).

14. Dispositif de commande selon la revendication 10, **caractérisé en ce que** le module de commande (30) commande la soupape de reflux de gaz d'échappement (12) de telle manière que, plus le régime du moteur (1) est bas, plus l'ouverture de la soupape de reflux de gaz d'échappement (12) est réduite, dans une région de décélération avec coupure de l'alimentation, d'un état de bas régime à un état de haut régime.

15. Dispositif de commande selon la revendication 10, **caractérisé en ce que** le module de commande (30) commande à la soupape de reflux de gaz d'échappement (12) de se fermer quand le moteur (1) est accéléré de nouveau.
